# EUROPEAN PATENT SPECIFICATION

(11) **EP 2 011 183 B1**
(45) Date of publication and mention of the grant of the patent: **08.06.2016**
(21) Application number: 07754708.1
(22) Date of filing: 02.04.2007
(51) Int. Cl.: H01M 8/00, H01M 8/04, H01M 8/06, H01M 8/12, H01M 8/24, H01M 8/02

(54) **FUEL CELL SYSTEM AND BALANCE OF PLANT CONFIGURATION**
BRENNSTOFFZELLENSYSTEM UND ANLAGENPERIPHERIEKONFIGURATION
SYSTEME DE PILE A COMBUSTIBLE ET CONFIGURATION DE PARTIE CLASSIQUE

(30) Priority: 03.04.2006 US 788044 P
(43) Date of publication of application: 07.01.2009
(73) Proprietor: Bloom Energy Corporation, Sunnyvale, CA 94089-1137 (US)
(72) Inventor: AARON, Stuart, Sunnyvale, CA 94089-1137 (US); BALLANTINE, Arne, Watson, Sunnyvale, CA 94089-1137 (US); CHELDELIN, Brent, Sunnyvale, CA 94089-1137 (US); COUSE, Stephen, Sunnyvale, CA 94089-1137 (US); KALIKA, Vlad, Sunnyvale, CA 94089-1137 (US); LYLE, William, David, Sunnyvale, CA 94089-1137 (US); SRIDHAR, K.R., Sunnyvale, CA 94089-1137 (US); VENKATARAMAN, Swaminathan, Sunnyvale, CA 94089-1137 (US); WEINGAERTNER, David, Sunnyvale, CA 94089-1137 (US)
(74) Representative: Wichmann, Hendrik
(86) International application number: PCT/US2007/008225
(87) International publication number: WO 2007/117406

(56) References cited:
- EP-A- 1 258 453
- EP-A- 1 571 726
- WO-A-00/61707
- WO-A1-2005/015674
- DE-A1- 4 005 468
- DE-A1- 19 924 777
- US-A1- 2001 009 653
- US-A1- 2004 006 914
- US-A1- 2004 224 197
- US-B1- 6 423 437
- US-B1- 6 479 177
- US-B2- 6 828 048

## Description

### BACKGROUND OF THE INVENTION

The present invention is generally directed to fuel cell systems and more specifically to balance of plant components of high temperature fuel cell systems and their operation.

Fuel cells are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as the solid oxide regenerative fuel cells, that also allow reversed operation, such that oxidized fuel can be reduced back to unoxidized fuel using electrical energy as an input.

While diesel is a readily available fuel, it contains long chain hydrocarbons (Paraffins, Olefins, Napthenes and Aromatics) which are difficult to reform. Issues with reformation can lead to formation of coke within the reforming reactor. These formations can cause a failure of any system using diesel reformation. Use of diesel fuel within most types of fuel cell systems requires some sort of reformation process to convert the diesel to a hydrogen rich reformate or syngas (CO + H₂ mixture). Because of the problems with reformation, construction of a prior art fuel cell system powered by diesel fuel has been difficult.

Proposed solutions in the prior art use the concept of pre-reformation in which the diesel fuel is pre-conditioned, breaking larger hydrocarbons into smaller ones. The pre-reformation step is conducted in a catalyst containing pre-reformer via a catalyst mediated reformation reaction. Then, a subsequent standard reforming step is performed on the smaller hydrocarbons. This solution presents issues of thermal integration and can result in a loss of overall system efficiency. Furthermore, because a pre-reforming catalyst must be provided, the cost of the total system is increased.

EP1258453 (A2) discloses a method of using a diesel reforming strategy, comprising: supplying diesel fuel (12) to a fractional distillation device (10); fractionally distilling said diesel fuel (12) to produce a light fuel stream (14) and a heavy fuel stream (16); and reforming said light fuel stream (14) in a reformer (20) to produce a reformate (22).

WO2005015674 (A1) discloses a reformer module (10) comprising a hollow support member (12) having at least one passage (14) extending longitudinally therethrough, means to supply a fuel to the at least one passage the hollow support member (14) having an external surface (20), characterised in that a catalyst layer (24) being arranged on at least a portion of the external surface (20) of the hollow support member (12) and a sealing layer (26) arranged on the catalyst layer (24) and the external surface (20) of the hollow support member (12) other than the at least a portion of the external surface (20) of the hollow support member (12).

US2004006914 (A1) discloses a compact and efficient fuel processor operating at pressures higher than one atmosphere and temperatures above 300°C for reforming distillate hydrocarbon fuels containing sulfur to obtain high quality hydrogen product, comprising: a separation assembly for converting and separating a sulfur-containing distillate fuel feed into an aliphatics-rich and sulfur-depleted gas stream and an aromatics-rich and sulfur-rich liquid stream; a desulfurization assembly for receiving the aliphatics-rich and sulfur-depleted gas stream exiting the separation assembly and for removing hydrogen sulfide therefrom to output desulfurized gas; a combustion assembly for receiving said aromatics-rich and sulfur-rich liquid stream exiting the separation assembly and for combusting said liquid stream with air to yield process heat; and a reforming assembly in which process heat from the combustion assembly is used to generate steam and convert the desulfurized gas exiting the desulfurization assembly to a hydrogen-rich stream.

### BRIEF DESCRIPTION OF THE DRAWINGS

Figures 1-3 are schematics of fuel cell systems according to the first disclosed aspect (not according to the present invention).
Figure 4A-4D are three dimensional views of purge dampers according to the first disclosed aspect (not according to the present invention).
Figures 5 and 6 are schematics of fuel cell systems according to the present invention.
Figures 7, 8, 9 and 10 are schematics of fuel cell systems according to the present invention.
Figures 11, 12, 13 and 14 are schematics of fuel cell systems according to the fourth disclosed aspect (not according to the present invention).
Figure 15 is a schematic of a fuel cell system according to the fifth disclosed aspect (not according to the present invention).
Figure 16 is a schematic of a fuel cell system according to the seventh disclosed aspect (not according to the present invention).

### DETAILED DESCRIPTION OF THE EMBODIMENTS

Fuel cell systems and balance of plant ("BOP") configuration are described herein. It should be noted that each embodiment of the invention as defined in the claims can be used independently of the other embodiments of the invention as defined in the claims or together with any one of the other embodiments of the invention as defined in the claims or together with any one of the disclosed aspects.

Furthermore, while the embodiments of the invention as defined in the claims are preferably used with solid oxide fuel cells (SOFC), other high and/or low temperature fuel cell types, such as molten carbonate, PEM, phosphoric acid, etc. may also be used if appropriate.

### I. Fuel Cell System Ventilation Scheme

The first aspect discloses a fuel cell system ventilation scheme. The fuel cell ventilation scheme can successfully purge heavier or lighter than air fumes prior to start-up. The suction points can be easily modified to allow rapid certification. The scheme allows control of the temperature of the internal cabinet for hot and cold weather installations.

In order to use electrical parts which are not hazardous area classified in a fuel cell system, a purge of the fuel cell system cabinet or housing is required. The purpose of this purge is to remove any combustible vapors from the cabinet prior to startup. The ventilation system is typically dormant while the system is shutdown and concentrations of vapors may have accumulated.

Prior art solutions include use of ventilation fans which may be explosion proof rated. These fans are used to conduct a cabinet purge prior to startup. However, in each of these cases a specific gas type - either lighter or heavier than air- is specified in the design. Thus, the ventilation fans are designed to purge lighter or heavier than air gas. Operation in a single unit with both gas types is problematic when certification codes and standards are considered.

The first aspect discloses a system which can operate on lighter or heavier than air fuels and a purge scheme which can remove accumulated gases from upper and lower zones of the cabinet (i.e., the lighter than air gases from the top of the cabinet and heavier than air gases from the bottom of the cabinet).

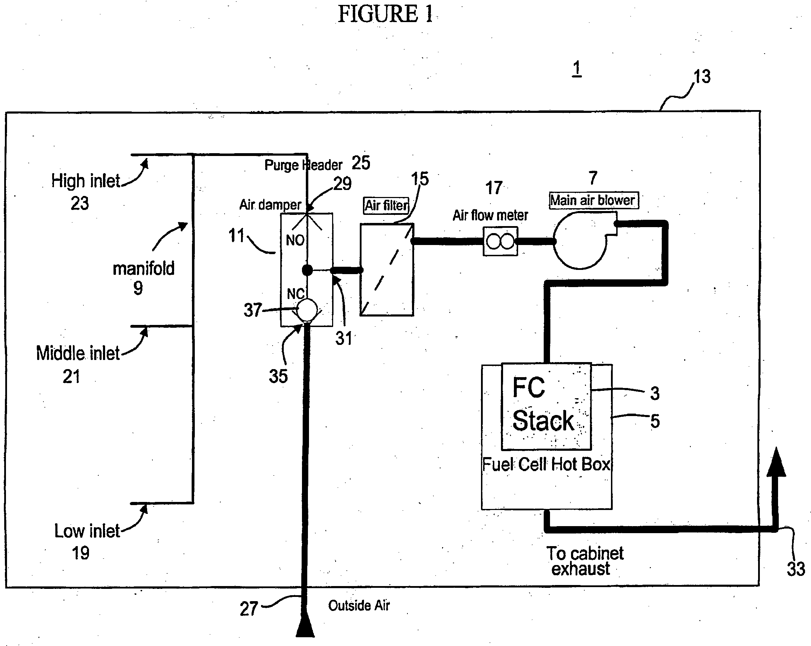

Figure 1 below schematically illustrates the components of the system 1. The fuel cell system 1 includes at least one fuel cell stack 3 located in hot box 5, a main air blower 7, which is preferably explosion proof area classification rated, a purge manifold 9 and a purge damper 11. Preferably, these elements are located in the same cabinet or housing 13. The hot box 5 may contain plural fuel cell stacks 3, such as solid oxide fuel cell stacks and other balance of plant components, such as heat exchangers, as described in U.S. application serial number 11/002,681, filed December 3, 2004. The system may have other optional components, such as an air filter 15 and an air flow meter 17. The output of the flow meter may be used to control the blower or other components either manually or via a computer or other electronic controller. In an alternative configuration, the air filter 15 may be placed in the path of the air intake 27 upstream of the outside air inlet 35 into the damper 11. In this configuration, air, once in the system, does not need to be filtered again.

The manifold 9 may comprise any tube or conduit which extends at least partially in a vertical direction (i.e., in a completely vertical direction or in a direction that has a vertical component, such as in a diagonal direction between vertical and horizontal) in the cabinet 13, and which contains a low inlet 19 in a lower part of the cabinet 13 where heavy gases would accumulate, and a high inlet 23 in an upper part of the cabinet 13 where light gases would accumulate. While a manifold 9 with three inlets (low 19, middle 21 and high 23) is shown, it should be understood that the manifold may have two inlets (e.g., low and high) or more than three inlets. The inlets may connect to the same manifold purge header 25 (which comprises an inlet conduit to the damper 11) or each inlet may be separately connected to the damper 11. Each inlet 19, 21, 23 can be adjusted with respect to the other inlets to preferentially draw in air from that inlet. In other words, the amount or ratio of the air being drawn into one inlet compared to the other inlets may be adjusted based on the type of fuel that is used in the system. For example, the inlets may be adjusted such that more air is preferentially drawn in from the high inlet 23 and less air is drawn from the low inlet 19 or vice versa. The adjustment may comprise a one time calibration or tuning setup, depending on if the system will operate with heavier than air fuel or lighter than air fuel. This is done by adjusting a flap or other flow restrictor to restrict a portion of the manifold hole. This adjustment may be performed one time manually based on the type of fuel the system will use (i.e., such that more air is drawn in from the high inlet 23 for systems operating on lighter than air fuel or more air is drawn in from the low inlet 19 for systems operating on heavier than air fuel). However, for a system that uses both lighter and heavier than air fuels interchangeably, the adjustment may automated, by using one or more valves or other flow restrictors, located in the manifold and/or in the manifold inlets.

The blower 7 is used to purge (i.e., blow) the lighter and heavier than air accumulated combustible vapors from the cabinet 13 through the manifold 9. The damper 11 comprises any suitable air flow direction controller which is used to switch the air flow direction between the inside to outside of the cabinet 13 ("to manifold") direction and outside to inside of the cabinet 13 direction.

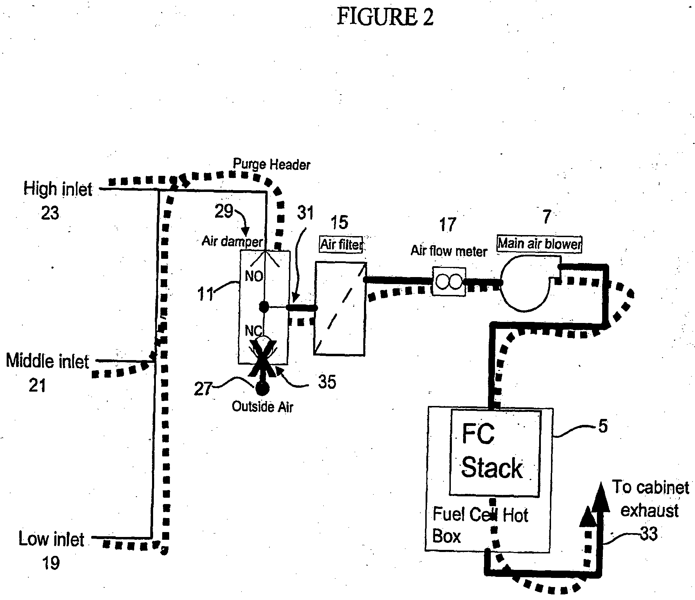

The system 1 operates as follows. The purge damper is first positioned in the "to manifold" position. As shown schematically in Figure 2, the outside air inlet 35 into the damper 11 is closed and the inlet 29 of the damper 11 into the purge header 25 portion of the manifold 9 is open. This is the de-energized position of the damper for start-up or purge operation. The main air blower 7 is energized at maximum flow and operated until sufficient air changes are completed. The purge air is drawn through each inlet 19, 21, 23 into the purge manifold 9. The manifold is designed to draw air from all regions of the cabinet 13 which could fill with flammable gas = upper, middle and lower zones = by drawing in air through the high 23, middle 21 and low 19 inlets of the manifold 9. As shown in Figure 2, the purge air and any flammable gases flow into the manifold through the manifold inlets. The purge air and flammable gases then flow through conduits or pipes from the manifold purge header 25 into the inlet 29 of the damper 11 (marked "NO" for "normally open" in Figure 2) connected to the manifold. The gases flow from the outlet 31 of the damper through the filter 15, flow meter 15, blower 7 and hot box 5 into the cabinet exhaust 33. The air flow is shown by dashed line in Figure 2. Preferably, this occurs before the fuel cell system start-up (i.e., before the operation of the fuel cell stack 3 to generate electricity is initiated).

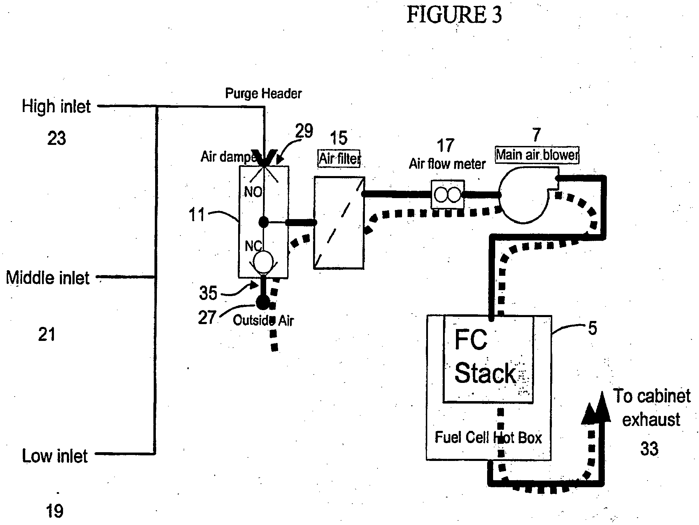

After the purge is completed, the purge damper 11 is repositioned to a normal running position where the suction air comes from outside the cabinet, as shown in Figure 3. Thus, the "NO" inlet 29 of the damper is closed and the manifold 9 is sealed off from the damper 11. The second ("NC" for "normally closed") inlet 35 of the damper 11 connected to an outside air intake 27 is open. The air flows from air intake 27 through the "NC" inlet 35 of the damper 11 and then through the outlet 31 of the damper, the filter 15, the flow meter 17 and the blower 7 into the stack 3 located in the hot box 5. The air flow is shown by dashed line in Figure 3. The operation of the fuel cell stack to generate electricity is then initiated, and fuel is provided to the stack.

The damper inlet markings "NO" and "NC" (which stand for "normally open" and "normally closed", respectively) indicate the position the damper 11 will take when it is de-energized. In the de-energized condition, the damper will be "normally open". This configuration, shown in Figure 2, means that if the whole system (and hence this damper) lose power on a shut-down, the damper will go to the normally open condition where the air flow is lined up to the purge header. This is also the case during first start-up, when the only energized device may be the blower. The damper is maintained in the normally open, "to manifold" (i.e., "to purge header") position without any external power source. Therefore, the damper does not need to be rated for operation in a hazardous environment. Also, in a de-energized condition, the path for drawing air from outside the cabinet is "normally closed". In other words, this path is blocked without applying any external power to the damper. In the case of an energized condition, the damper may be positioned to block flow from the purge header, and allow air flow from the external air supply only by applying power.

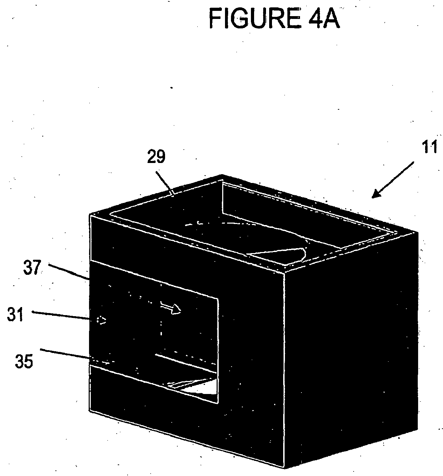

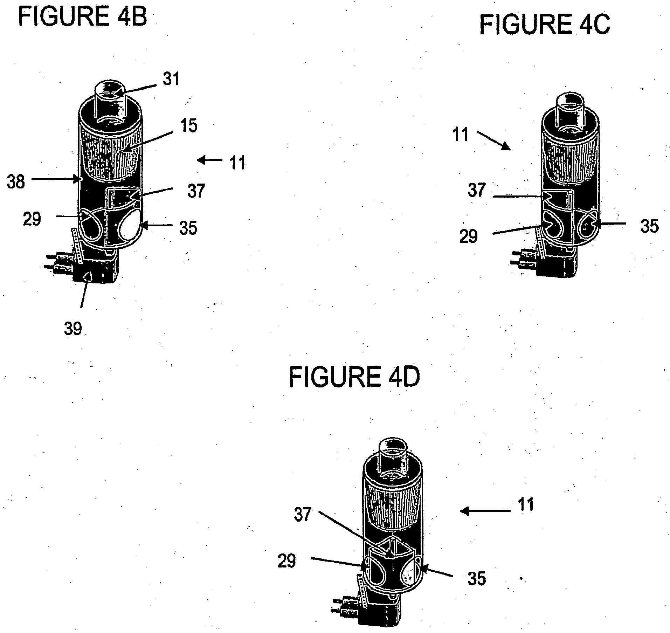

One non-limiting example of the purge damper 11 is illustrated schematically in Figure 4. It should be understood that other gas flow direction controllers may be used instead. Figure 4 shows the two sealable inlets ("NO" 29 and "NC" 35) on opposite sides of the damper housing and an outlet 31 located on a third side of the damper between the two inlet sides. A power actuated shutter 37 is located inside the damper housing and is used to seal one of the inlets 29, 35. When the power is OFF, the weight of the shutter and/or a spring loaded mechanism (i.e., pressure of a spring acting on the shutter) causes the shutter 37 to close the "NC" inlet 35 to outside air and to leave the "NO" inlet 29 open. The shutter can be moved to open the "NC" inlet 35 by a signal from a system controller in the energized condition. Figure 4B illustrates another aspect of the purge damper 11. In this configuration, the damper housing 38 may have a cylindrical shape and the housing is preferably positioned vertically in the cabinet 13. However, the housing 38 may have a rectangular or other polygonal shape. In this aspect, the filter 15 and the shutter 37 are located inside the damper 11 housing 38. If desired, the filter 15 may also be located outside the damper housing. The damper housing 38 is positioned over a motor or other suitable actuator 39 which is used to move the shutter 37. The inlet openings 29 and 35 are preferably located in the lower portion of the housing 38 while the outlet opening 31 is located in the upper part of the housing 38 above the filter 15. The openings 29 and 35 may be located at about a right angle with respect to each other in the wall of the housing 38, such as at an angle of 45-120 degrees, for example 90 degrees. The shutter 37 may comprise a pie or wedge shaped sheet metal or other part which rotates inside the housing to cover one of the inlet openings while leaving the other inlet opening uncovered. For example, in Figure 4B, the shutter 37 closes opening 35 while leaving opening 29 uncovered. In Figure 4C, the actuator 39 rotates shutter about 90 degrees to cover opening 29 while leaving opening 35 uncovered. The configuration of Figures 4B and 4C is advantageous because it requires the actuator 39 to rotate the shutter 37 only 90 degrees. Such actuators are more widely available than 180 degree actuators. Furthermore, this configuration is designed for in-line placement for easier packaging within the cabinet 13.

In an alternative aspect, the purge damper can be positioned to draw some cabinet and some external air. This can be used in order to ensure a fixed main air blower inlet temperature and is beneficial for hot and cold temperature installations. In this case, both inlets "NO" 29 and "NO" 35 are open at the same time. For example, as shown in Figure 4D, the shutter 37 is positioned between the inlet openings 29, 35 to leave at least a portion of both openings uncovered.

The first aspect, disclosed herein, provides an ability to have a single fuel cell module design process heavier and lighter than air fuels, the ability to rapidly modify the locations of purge air flow suction by repositioning of the purge header and the ability to control the internal cabinet temperature.

### II. Hybrid Reformer For Fuel Flexibility

The fuel cell system of the invention as defined in the claims contains a hybrid reformer for providing fuel flexibility for a fuel cell system, such as a solid oxide fuel cell (SOFC) system. In other words, a single reformer is adapted to reform two or more different fuels that are used with the system. Thus, the single reformer allows operation of the system on multiple fuels without requiring separate reformers for different fuels.

A fuel reformer is a device that reforms a hydrocarbon fuel into a fuel stream comprising hydrogen and carbon monoxide. For example, in a steam-methane reformation (SMR) reaction, steam and methane are reformed in a reformer to a stream comprising hydrogen, carbon monoxide and other components. A reformer may comprise a catalyst coated fuel passage, such as a cylinder having the catalyst coated on its interior walls and/or on an insert in the reformer housing. The insert may comprise a catalyst coated tube, foil or wire. Other reformer geometry, such as a rectangular passage or other polygonal passages, may also be used.

The reformer catalyst may comprise a catalyst mixture containing rhodium and nickel. rhodium is used for stability and nickel is used for reactivity. Noble metals other than rhodium or in combination with rhodium may also be used to enhance stability.

The catalyst composition is optimized for handling different fuels. For handling high hydrocarbon fuel, such as diesel and jet fuel (including JP5 and JP8), less nickel is used to avoid coking. For handling lower hydrocarbon fuels such as natural gas, methane, propane, methanol, ethanol, etc. more nickel is used.

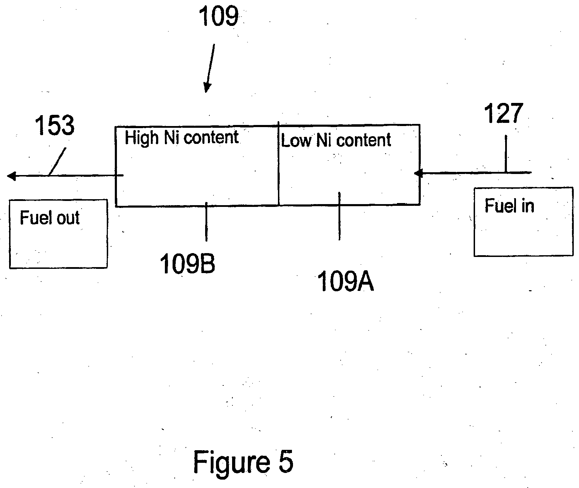

Figure 5 shows the configuration of a hybrid reformer 109 according to the invention as defined in the claims with two segments. The leading segment 109A (i.e., the segment where the fuel enters the reformer) from the fuel inlet conduit 127 contains less nickel for reforming a high hydrocarbon fuel, such as diesel, and a trailing segment 109B (i.e., the segment where the fuel exits the reformer) contains more nickel than the leading segment for reforming low hydrocarbon fuel, such as natural gas or methane. The trailing segment is connected to a reformed fuel outlet conduit 153. The leading segment 109A contains a lower amount and/or concentration of nickel than the trailing segment 109B. The reformer 109 may comprise a housing and one or more catalyst coated inserts to form the above described low and high nickel segments. The actual nickel amount and/or concentration in each segment can be optimized based on the actual fuel that will be used, the system geometry, temperature and other variables. The reaction kinetics of higher hydrocarbons reforming to methane is faster than the reaction kinetics of methane reforming to produce syngas. Furthermore, the hybrid reformer can also be used together with internal reforming type fuel cells, to allow more methane slippage either by reducing the number of inserts or reducing the coated area of nickel catalyst. While a sharp, single step interface is shown in Figure 1 between segments 109A and 109B, the nickel amount or concentration may be graded such that it increases monotonically or in plural steps from the inlet into segment 109A to the outlet in segment 109B. Thus, a sharp, single step interface between the segments is not required. Therefore, in one configuration, the reformer contains a graded composition increasing monotonically or in steps from segment 109A to segment 109B, with less nickel at the leading edge of segment 109A and more nickel at the trailing edge of segment 109B. The rhodium stabilizing catalyst amount or concentration may be substantially constant throughout the reformer, such that the leading and trailing segments contain substantially equal amounts of rhodium. In another configuration, the reformer contains a constant nickel amount or concentration throughout its length, such that the leading and trailing segments contain substantially equal amounts of nickel. However, in this configuration, the reformer contains more rhodium in segment 109A than in segment 109B. The rhodium amount or concentration may decrease from segment 109A to segment 109B in a stepwise fashion (single step or multiple steps) or it may be monotonically graded, such that segment 109A contains a higher amount or concentration of rhodium than segment 109B. In another configuration, the content of both nickel and rhodium varies between segment 109A and segment 109B. The nickel content increases in one or more steps or monotonically from segment 109A to segment 109B while the rhodium content decreases in one or more steps or monotonically from segment 109A to segment 109B. Thus, the leading segment 109A of the reformer contains a higher amount or concentration of the rhodium catalyst than the trailing segment 109B, and the leading segment 109A of the reformer contains a lower amount or concentration of the nickel catalyst than the trailing segment 109B. For higher hydrocarbon fuels, such as JP5 or diesel, a reformer containing a combination of graded nickel and rhodium increasing in the opposite directions along the reaction path may be used.

A method of operating the reformer 109 includes providing the high hydrocarbon fuel into the reformer, such that the fuel passes through the leading segment 109A before the trailing segment 109B. The fuel is reformed in the reformer into a reformate. The method further includes providing the reformate of the high hydrocarbon fuel into a fuel cell stack. The method further includes providing a low hydrocarbon fuel into the reformer, such that the fuel passes through the leading segment before the trailing segment. The fuel is reformed in the reformer into a reformate. The method also includes providing the reformate of the low hydrocarbon fuel into the fuel cell stack. Of course the order of providing the high and low hydrocarbon fuel into the reformer may be reversed and it is expected that the fuels may be switched several times during the operation and/or lifetime of the reformer.

Thus, the reformer 109 may be connected to both high and low hydrocarbon fuel sources. The high hydrocarbon fuel source may comprise a diesel or jet fuel tank. The low hydrocarbon fuel source may comprise a natural gas line or a fuel storage tank, such as a natural gas, methane, ethanol, etc. storage tank. A valve or other switching mechanism in the fuel inlet conduit 127 switches the type of fuel being provided to the reformer 109. The valve may be controlled by a computer or control system or manually by an operator.

The hybrid reformer allows the fuel cell system to operate on different fuels, such as higher and lower hydrocarbon fuels and provides fuel flexibility including all liquid and gaseous fuels. There is no need for having two sets of reformers depending on the application. This reduces the reformer and system cost. The reformer can also be used with internal reforming type fuel cells, such as internal reforming solid oxide fuel cells.

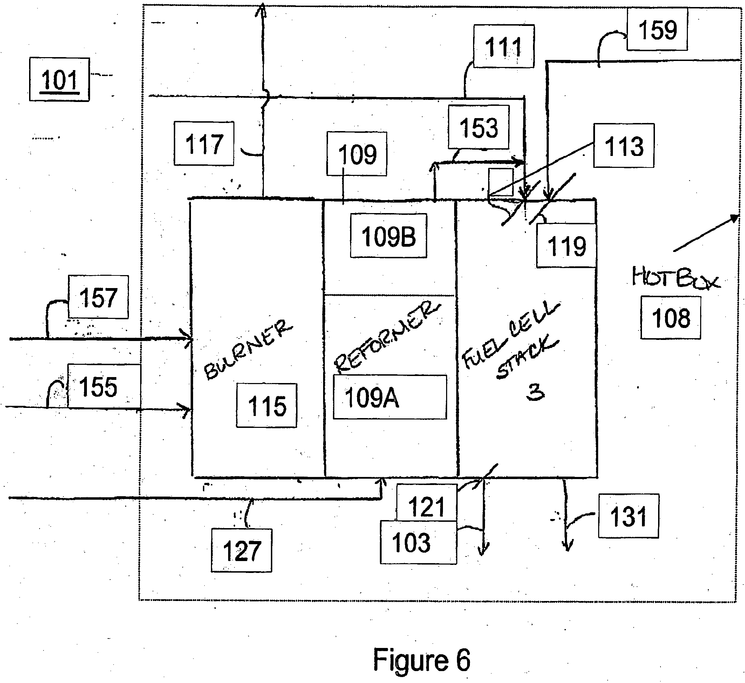

Figure 6 illustrates details of a portion of the fuel cell system 101 which is located in the hot box 108. The hot box 108 may contain plural fuel cell stacks 3, such as solid oxide fuel cell stacks and other balance of plant components, such as heat exchangers, as described in U.S. application serial number 11/002,681, filed December 3, 2004. Each fuel cell stack contains a plurality of high temperature fuel cells, such as solid oxide fuel cells. Each fuel cell contains an electrolyte, an anode electrode on one side of the electrolyte in an anode chamber, a cathode electrode on the other side of the electrolyte in a cathode chamber, as well as other components, such as interconnects which function as gas separator plates and electrical contacts, fuel cell housing and insulation. In an SOFC operating in the fuel cell mode, the oxidizer, such as air or oxygen gas, enters the cathode chamber, while the fuel, such as hydrogen or hydrocarbon fuel, enters the anode chamber. Any suitable fuel cell designs and component materials may be used.

The fuel cells of the stack 3 may be internal reformation type fuel cells. Fuel cells of this type contain a fuel reformation catalyst in the anode electrode and/or in the anode chamber to allow the hydrocarbon fuel, such as an oxygenated hydrocarbon fuel, to be reformed internally on or adjacent to the fuel cell anode electrodes.

Alternatively, the fuel cells may be external reformation type fuel cells. Fuel cells of this type require that the reformer 109 be an external reformer either because these fuel cells lack the fuel reformation catalyst in the anode electrode and/or in the anode chamber, or because the internal reformation catalyst may not be able to reform a desired amount of hydrocarbon fuel. Thus, the fuel reformation may be external or partially internal and partially external (i.e., reformation in the reformer and in the fuel cells).

The 109 reformer is preferably located separately from but thermally integrated with the high temperature fuel cell stack 3 to support the endothermic reaction in the reformer 109 and to cool the stack 3. The system also preferably contains a burner or combustor 115. Thus, the system comprises a thermally integrated reformer 109, combustor 115 and stack 3. The reformer 109 may be heated by the stack cathode exhaust, by radiative and/or convective heat from the stack and/or by the combustor heat during steady state operation.

The term "thermally integrated" in this context means that the heat from the reaction in the fuel cell stack 3 drives the net endothermic fuel reformation in the fuel reformer 109. As illustrated in Fig. 2, the fuel reformer 109 is thermally integrated with the fuel cell stack 3 of the invention by placing the reformer 109 and stack 3 in the same hot box 108 and/or in thermal contact with each other, or by providing a thermal conduit or thermally conductive material which connects the stack 3 to the reformer 109.

The stack 3 generates enough heat to conduct the steam reformation reaction in the reformer during steady-state operation of the system 101. However, under some different operating conditions ranging from low to high stack efficiency and fuel utilization, the exothermic heat generated by the stack 3 and provided to the reformer may be greater than, the same as or less than the heat required to support the reforming reaction in the reformer. The heat generated and/or provided by the stack 3 may be less than required to support steam reformation in the reformer 109 due to low fuel utilization, high stack efficiency, heat loss and/or stack failure/turndown. In this case, supplemental heat is supplied to the reformer. The system 1 provides the supplemental heat to the reformer 109 to carry out the reformation reaction during steady state operation. The supplemental heat may be provided from the burner or combustor 115 which is thermally integrated with the reformer 109 and/or from a cathode (i.e., air) exhaust conduit which is thermally integrated with the reformer 109. While less preferred, the supplemental heat may also be provided from the anode (i.e., fuel) exhaust conduit which is thermally integrated with the reformer. The supplemental heat may be provided from both the combustor 109 which is operating during steady state operation of the reformer and/or during start-up and from the cathode (i.e., air) exhaust of the stack 3. For example, the combustor 115 may be in direct contact with the reformer, and the stack cathode exhaust conduit 103 is configured such that the cathode exhaust contacts the reformer 109 and/or wraps around the reformer 109 to facilitate additional heat transfer. This lowers the combustion heat requirement for the reformation reaction.

The reformer 109 may be sandwiched between the combustor 115 and one or more stacks 3 to assist heat transfer as described in more detail below. For example, the reformer 109 and combustor 115 may share at least one wall or be positioned sufficiently close to each other for radiative and/or convective heat transfer. The combustor 115 closes the heat balance and provides additional heat required by the reformer. When no heat is required by the reformer, the combustor unit acts as a heat exchanger. Thus, the same combustor (i.e., burner) 115 may be used in both start-up and steady-state operation of the system 101. When using combustion catalysts coated on the conduit walls, the fuel may be introduced at several places in the combustion zone to avoid auto ignition and local heating.

In operation, a purified hydrocarbon fuel and steam mixture is fed to the lower end of the reformer 109 through the fuel inlet conduit 127. If desired, the heavy hydrocarbon fuel, such as diesel fuel, fuel may first be passed through a fractionator to separate the light ends from the heavy ends, as described below. The separated light ends are then provided to the reformer 109 through conduit 127. A fractionator is a device which separates the shorter hydrocarbon chain species of the high hydrocarbon (i.e., diesel or jet) fuel from the longer hydrocarbon chain species. These are referred to as "light ends" (predominantly C1 to C8 hydrocarbons) and "heavy ends". The light ends are sent to a reformer. The fractionator can be completely eliminated (not according to the invention) if the reformer can handle higher hydrocarbons and hydrogen from anode exhaust gas recycled prevents potential coking. The fuel may be provided into the fractionator from a storage vessel, such as a diesel or jet fuel tank. A non-limiting example of a fractionator is a fractionation column, such as a distillation column containing trays and/or packing materials, of the type used in distillation of crude oil. The separation of the light and heavy ends in the fractionation column occurs by distillation of different ends in different zones of the column, with light and heavy ends being removed from different zones of the column.

If desired, the hydrocarbon fuel may be provided directly into the stack via a by-pass conduit 111 which by-passes the reformer 109. The reformed product is provided from the reformer into the stack anode (fuel) inlet 113 through conduit 153. The spent fuel is exhausted from the stack through the anode exhaust conduit 131. Air and fuel enters into the burner 115 via conduits 155 and 157.

The air enters the stack from air inlet conduit 159 through the cathode (air) inlet 119 and exits through exhaust opening 121 into the cathode (i.e., air) exhaust conduit 103. The system 101 is preferably configured such that the cathode exhaust (i.e., hot air) exits on the same side of the system as the inlet of the reformer 109. For example, as shown in Figure 6, since the mass flow of hot cathode exhaust is the maximum at the lower end of the device, it supplies the maximum heat where it is needed, at feed point of the reformer. In other words, the mass flow of the hot air exiting the stack is maximum adjacent to the lower portion of the reformer where the most heat is needed. However, the cathode exhaust and reformer inlet may be provided in other locations in the system 101, such as to a steam generator. If desired, the hot combustor 115 exhaust may be provided into the steam generator through conduit 117 to heat the water in the generator to generate steam. The combustor exhaust may be provided into the steam generator in addition to or instead of one or more exhaust streams from the fuel cell stack 3.

### III. Fuel Cell System Operated On Liquid Fuels

The invention as defined in the claims provides a system which is capable of being operated on liquid fuels. The system operates with high hydrocarbon fuels, such as diesel, (including low sulfur diesel and ultra low sulfur diesel), jet fuel (including JP-5 and JP-8 jet fuels), and kerosene (including low sulfur kerosene and ultralow sulfur kerosene).

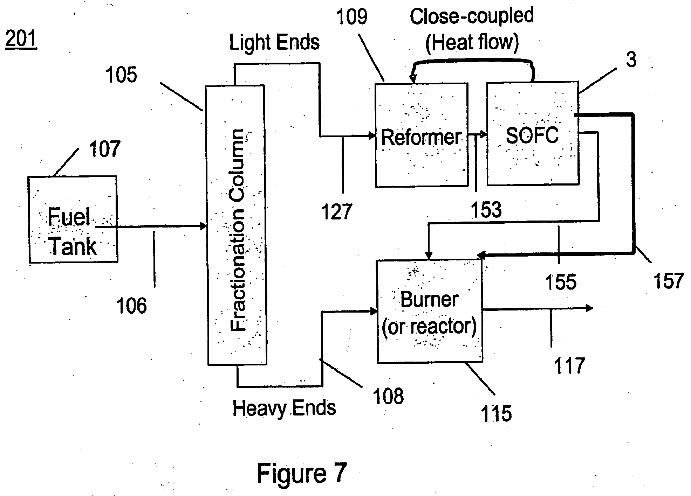

The invention as defined in the claims particularly provides the following elements for operation of a fuel cell system 201, such as a SOFC system, with high molecular weight hydrocarbon fuel, such as diesel and/or jet fuel. It is understood that hydrocarbon fuels normally contain traces of other besides hydrogen and carbon. The elements are illustrated in Figure 7.

The system 201 contains a fractionator 105. This device separates the shorter hydrocarbon chain species of the high hydrocarbon (i.e., diesel or jet) fuel from the longer hydrocarbon chain species. These are referred to as "light ends" (predominantly C1 to C8 hydrocarbons) and "heavy ends". The light ends are sent to a reformer 109 while the heavy ends are sent to the burner 115. The fuel may be provided into the fractionator 105 through a conduit 106 from a storage vessel 107, such as a diesel or jet fuel tank. While this is not shown in Figure 7, the fractionator 105 can be completely eliminated (not according to the invention) if the reformer 109 can handle higher hydrocarbons and hydrogen from anode exhaust gas is recycled to prevent potential coking. In this case, the conduit 106 connects the tank 107 directly to the reformer 109. A non-limiting example of a fractionator is a fractionation column, such as a distillation column containing trays and/or packing materials, of the type used in distillation of crude oil. The separation of the light and heavy ends in the fractionation column occurs by distillation of different ends in different zones of the column, with light and heavy ends being removed from different zones of the column.

The reformer 109 is preferably a close-coupled steam reformer. The reformer is preferably thermally integrated with a high temperature fuel cell stack or stacks 3, such as SOFC fuel cell stack. The reformer is positioned in close proximity to the SOFC cell stack so that product heat from the stack may be used to drive the reforming reaction in the reformer. U.S. Published Application US-2005-0164051-A1 filed as U.S. application serial number 11/002,681 on December 3, 2004, describes and illustrates one example of thermal integration of stack and reformer. Any suitable reformer geometry and construction may be used, such as a metal foil type reformer, coated with catalyst, such as a Ni and Rh mixture. A reformer may comprise a catalyst coated fuel passage, such as a cylinder having the catalyst coated on its interior walls and/or on an insert in the reformer housing. The insert may comprise a catalyst coated tube, foil or wire. Other reformer geometry, such as a rectangular passage or other polygonal passages, may also be used. The reformer may be a steam reformer where the fuel is mixed with steam for a steam reformation reaction. The reformer 109 provides a reformed fuel (i.e., reformate), such as a hydrogen and CO containing syngas, into the anode inlet of the stack 3.

According to the invention, a hybrid reformer 109 for providing fuel flexibility for a fuel cell system as described above, is used. Such a reformer is adapted to reform two or more different fuels that are used in the system. The reformer catalyst composition is optimized for handling different fuels. For handling high hydrocarbon fuel, such as diesel and jet fuel (including JP5 and JP8), less nickel is used to avoid coking. For handling lower hydrocarbon fuels, such as natural gas, methane, propane, methanol, ethanol, etc. more nickel is used. The hybrid reformer has two segments. The leading segment (i.e., the segment where the fuel enters the reformer) from the fuel inlet conduit 127 contains less nickel for reforming a high hydrocarbon fuel, such as diesel, and a trailing segment (i.e., the segment where the fuel exits the reformer) contains more nickel than the leading segment for reforming low hydrocarbon fuel, such as natural gas or methane. The trailing segment is connected to a reformed fuel outlet conduit 153. The leading segment contains a lower amount and/or concentration of nickel than the trailing segment. The reformer 109 may comprise a housing and one or more catalyst coated inserts to form the above described low and high nickel segments. The actual nickel amount and/or concentration in each segment can be optimized based on the actual fuel that will be used, the system geometry, temperature and other variables. The reaction kinetics of higher hydrocarbons reforming to methane is faster than the reaction kinetics of methane reforming to produce syngas. Furthermore, the hybrid reformer can also be used together with internal reforming type fuel cells, to allow more methane slippage either by reducing the number of inserts or reducing the coated area of nickel catalyst or by lowering the catalyst density or altering the catalyst concentration.

The system 201 also contains a fuel cell stack 3, such as a SOFC stack, which is a stack of solid oxide fuel cells. An anode inlet stream (i.e., the reformate stream) from the reformer 109 is directed through conduit 153 to the anode inlet of the SOFC stack 3. Oxidation air is provided from another source, such as an air blower or pump. The outlet air (i.e., the stack cathode exhaust stream), carrying product heat, may be passed over the exterior of the steam reformer elements in order to provide heat of reaction for reformation, as described, for example, in U.S. Published Application US-2005-0164051-A1. If the SOFC's are internal reforming type fuel cells, then the fuel reformation can take place at the fuel cell anodes or in the anode chambers, and the reformer 109 may be omitted (not according to the invention).

The system 201 also contains a burner 115. This structure oxidizes the waste streams of both the fractionator 105 and the SOFC stack 3. In other words, the heavy ends from the fractionator 105 and one or both of the stack anode (i.e., fuel) or cathode (i.e., air) exhaust streams are provided to the burner 115 via conduits 108, 157 and/or 155 respectively. The waste heat from the burner can be used in two ways. The waste heat may be provided via conduit 117 to supply the reboiler duty of the fractionator 105 and/or warming up the cathode exhaust of the SOFC stack 3 to generate total useful heat for combined heat and power (CHP) applications. A catalytic reactor may be provided instead of a burner 115 in order to lower the formation of NOₓ species in the exhaust.

The 109 reformer is preferably located separately from but thermally integrated with the high temperature fuel cell stack 3 to support the endothermic reaction in the reformer 109 and to cool the stack 3. The system may also comprise a thermally integrated reformer 109, burner or combustor 115 and stack 3. The reformer 109 may be heated by the stack cathode exhaust, by radiative and/or convective heat from the stack and/or by the combustor heat during steady state operation.

The term "thermally integrated" in this context means that the heat from the reaction in the fuel cell stack 3 drives the net endothermic fuel reformation in the fuel reformer 109. The fuel reformer 109 may be thermally integrated with the fuel cell stack 3 by placing the reformer 109 and stack 3 in the same hot box and/or in thermal contact with each other, or by providing a thermal conduit or thermally conductive material which connects the stack 3 to the reformer 109.

The stack 3 generates enough heat to conduct the steam reformation reaction in the reformer during steady-state operation of the system 201. However, under some different operating conditions ranging from low to high stack efficiency and fuel utilization, the exothermic heat generated by the stack 3 and provided to the reformer may be greater than, the same as or less than the heat required to support the reforming reaction in the reformer. The heat generated and/or provided by the stack 3 may be less than required to support steam reformation in the reformer 109 due to low fuel utilization, high stack efficiency, heat loss and/or stack failure/turndown. In this case, supplemental heat is supplied to the reformer. The system 201 provides the supplemental heat to the reformer 109 to carry out the reformation reaction during steady state operation. The supplemental heat may be provided from the burner or combustor 115 which is thermally integrated with the reformer 109 and/or from a cathode (i.e., air) exhaust conduit which is thermally integrated with the reformer 109. While less preferred, the supplemental heat may also be provided from the anode (i.e., fuel) exhaust conduit which is thermally integrated with the reformer. The supplemental heat may be provided from both the combustor 115 which is operating during steady state operation of the reformer and/or during start-up and from the cathode (i.e., air) exhaust of the stack 3. For example, the combustor 115 may be in direct contact with the reformer, and the stack cathode exhaust conduit 155 is configured such that the cathode exhaust contacts the reformer 109 and/or wraps around the reformer 109 to facilitate additional heat transfer. This lowers the combustion heat requirement for the reformation reaction.

The reformer 109 may be sandwiched between the combustor 115 and one or more stacks 3 to assist heat transfer as described in more detail below. For example, the reformer 109 and combustor 115 may share at least one wall or be positioned sufficiently close to each other for radiative and/or convective heat transfer. The combustor 115 closes the heat balance and provides additional heat required by the reformer. When no heat is required by the reformer, the combustor unit acts as a heat exchanger. Thus, the same combustor (i.e., burner) 115 may be used in both start-up and steady-state operation of the system 201. When using combustion catalysts coated on the conduit walls, the fuel may be introduced at several places in the combustion zone to avoid auto ignition and local heating.

In operation of the system 201, the liquid fuel is provided from tank 107 though conduit 106 to the fractionator 105. In the fractionator 105, the heavy ends are separated from the light ends, with the light ends being provided through conduit 127 to the reformer 109, while the heavy ends are provided through conduit 108 to the burner 115. The light ends are reformed in the reformer 109 and are provided to the fuel cell stack 3 via conduit 153. The heavy ends are burned in the burner 115 together with anode and/or cathode exhaust streams from the fuel cell stack 3. If desired, the system 201 may also be operated on light hydrocarbon fuel, such as natural gas, methane, ethanol, etc (not according to the invention). In that case, the light hydrocarbon fuel may be provided directly into the reformer 109 and the flow of the heavy hydrocarbon liquid fuel is switched off.

Sulfur is removed from the liquid fuel using sulfur adsorbents. During fractionation, significant portion of sulfur gets trapped in the "heavy-ends". Any slippage of sulfur in the "light ends" gets removed using a vapor phase sulfur guard. The vapor phase sulfur guard may not be required for ultralow sulfur kerosene or ultralow sulfur diesel.

In an alternative aspect, the hydrogen in the stack anode exhaust stream (i.e., the stack tail gas) may be recycled. Any amount of hydrogen left in the anode (i.e., fuel) exhaust stream can be used in two ways: (1) to reduce coke formation in the burner and/or (2) for hydrogenation of main fuel (i.e., recycling into the fuel inlet stream) to reduce longer chain hydrocarbons. The anode exhaust can be used with or without purification, as will be described in more detail below.

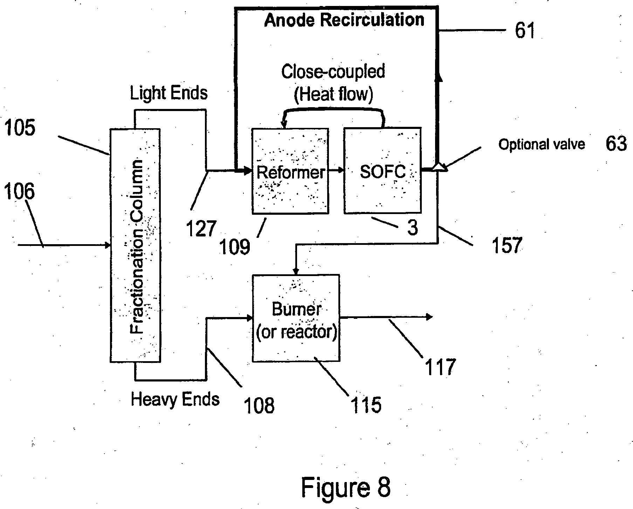

In one alternative aspect shown in Figure 8, the anode (i.e., fuel) exhaust stream recirculation is provided. A recirculation conduit 61 recirculates at least a portion of the anode exhaust stream of the SOFC stack 3 to the fuel inlet stream in the fuel inlet conduit 127. The recirculation element or elements are described in more detail, for example, in U.S. Published Application US-2005-0164051-A1. While this structure is advantageous because of the ability to recirculate product water in gaseous phase, it is also advantageous because the presence of hydrogen in the recirculated stream aids in the prevention of coke and soot formation in the reformer.

Preferably, the anode exhaust stream is provided into the fuel inlet stream prior to the fuel inlet stream entering the reformer. One or more valves 63 may be used to recycle only a portion of the anode exhaust stream into the fuel inlet stream while providing the rest of the anode exhaust stream into the burner 115. For example, the control system operated valve 63 adjusts the ratio of the amount of anode exhaust stream recirculated to the fuel inlet stream through conduit 61 to the amount of the anode exhaust stream provided to the burner 115 through the anode exhaust conduit 157. Furthermore, a blower or compressor may be used drive the recirculation. If desired, the cathode exhaust conduit 155 may be used to provide a separate cathode exhaust from the fuel cell stack 3 to the burner 115, as shown in Figure 7. Various recirculation methods are described in more detail in US application serial number 11/491,487, filed on July 24, 2006 (which claims priority to US provisional application serial number 60/701,976 filed on July 25, 2005) and in US application serial number 11/188,120, filed on July 25, 2005.

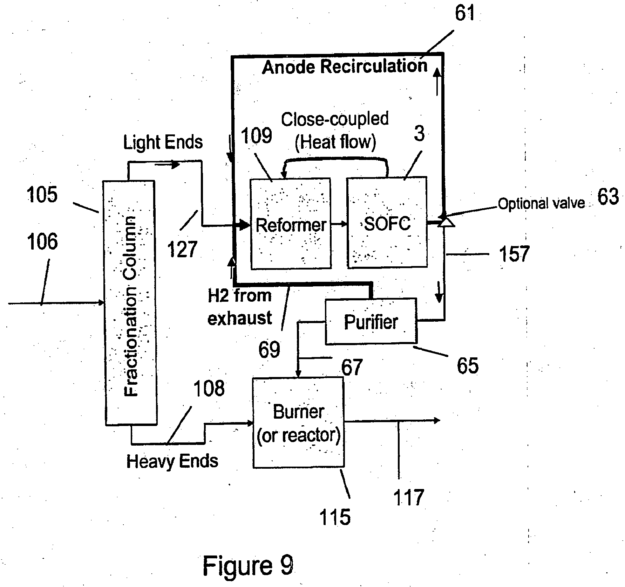

In another alternative aspect shown in Figure 9, the exhaust stream of the SOFC system may be purified to preferentially extract unreacted hydrogen or unreacted CO and H₂. This unreacted fuel may be recirculated to the fuel inlet stream. This provides the advantage of increased system efficiency and further avoidance of the formation of coke and soot by the increased hydrogen concentration in the reformer. The purified stream may also be only periodically recycled so that it may be used in the exhaust burner/reactor when needed, or in the reformer when needed. Thus, the hydrogen may be separated from the stack anode exhaust stream and recycled into the stack fuel inlet stream by using a hydrogen separator. For example, the stack anode exhaust from conduit 157 is provided into a hydrogen purifier or separator 65. The purified hydrogen is recirculated into the fuel inlet conduit 127 through conduit 69, while the remainder of the anode exhaust is provided to the burner 115 through conduit 67. If desired, an additional portion of the anode exhaust stream may be recirculated directly from the stack 3 to the fuel inlet stream in conduit 127 via conduit 61, as described above with respect to Figure 8. Alternatively, conduit 61 may be omitted or closed by valve 63, and the entire anode exhaust stream is provided to the purifier 65.

When a higher rate of hydrogen introduction is required in order to prevent coke or soot formation, the system may be operated at a lower rate of fuel utilization. This will then mean that more hydrogen will remain unreacted in the SOFC anode exhaust. Cascaded stages of hydrogen purification may be provided in order to recirculate a greater fraction of the hydrogen present in the anode exhaust if desired. Methods of purification may include electrochemical pumping of hydrogen, pressure swing adsorption removal of impurities, thermal swing adsorption or partial pressure swing adsorption methods, as described in more detail in US application serial number 11/491,487, filed on July 24, 2006 (which claims priority to US provisional application serial number 60/701,976 filed on July 25, 2005) and in US application serial number 11/188,120, filed on July 25, 2005. The hydrogen purifier 65 may comprise an electrochemical membrane hydrogen separator, a pressure swing adsorption separator, a thermal swing adsorption separator or a partial pressure swing adsorption separator. Thus, all or part of the anode exhaust stream is purified and recycled into the fuel inlet stream. If desired, the purification step can be omitted and all or part of the unpurified anode exhaust stream is provided into the fuel inlet stream.

In another alternative aspect, the system 201 can be started with diesel or with another liquid fuel such as ethanol, propane or another light hydrocarbon fuel, and brought to recirculation before switching to diesel or jet fuel. The advantage of the switch is that the anode gas can be recirculated. Thus, it may be possible to introduce diesel directly into the reformer with recycled hydrogen without the need for fractionator 105.

In another alternative aspect, an internal combustion engine rather than a burner uses the heavy ends from the fractionator. Thus, the burner 115 is replaced with an engine. For example, in some uses of diesel fuel, there are concurrent demands for fuel by SOFC systems and internal combustion engines. When this is the case, the SOFC system may be configured to operate only on light ends fuels, and store heavy ends fuels for use in the internal combustion applications. Thus, rather than burning the heavy ends in the burner, the heavy ends are provided from the fractionator to a storage vessel, such as a fuel storage tank. The heavy ends are then provided from the storage vessel to the engine to be used as fuel. Alternatively, the storage tank can be omitted and the heavy ends may be provided directly to the engine.

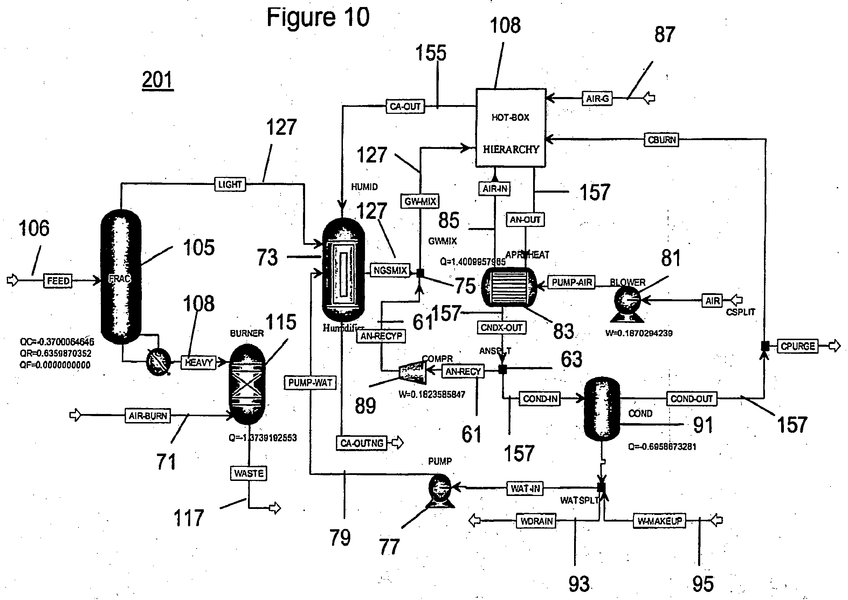

Figure 10 shows a more detailed Aspen simulation showing heat balances of the system schematic with a fractionator 105 and anode exhaust gas recirculation, similar to the high level schematic shown in Figure 8.

The system shown in Figure 10 contains the elements described and illustrated above in Figure 8, where "HOT BOX HIERARCHY" 108 refers to a hot box containing the thermally integrated stack 3 and reformer 109, plus any associated heat exchangers and other fluid handling components. The burner 115 may also be located in the hot box if desired. An air inlet conduit 71 is connected to the burner 115 to provide air to the burner to generate waste heat which can be used to heat other components, as described above. Alternatively, the cathode exhaust conduit 155 from the stack 3 may be used to provide air into the burner 115.

Figure 10 also illustrates the following system components. The optional humidifier 73 humidifies the fuel inlet stream (i.e., the light ends from) with water vapor or steam. Any suitable humidifier, such as a membrane type humidifier may be used. A humidified fuel inlet stream is provided from humidifier 73 into a three way valve 75 where it is mixed with the pressurized recycled anode exhaust stream from the recirculation conduit 61. These mixed streams are provided into the reformer via conduit 127. A humid cathode (air) exhaust stream from the stack 3 may also be provided into the humidifier 73 via the cathode exhaust conduit 155. A water pump 77 provides water into the humidifier 73 via conduit 79. Humidity required for a sufficiently high steam to carbon ratio to avoid coking in the reformer, heat exchangers, or conduits can be provided by one or more of the following: a steam generator which provides steam into the fuel inlet stream in conduit 127; recycling of the fuel cell stack anode exhaust stream using the recycle conduit 61, as shown in Figures 8-10; and/or by providing water to the fractionator 105. According to the invention, water is provided to the bottom of the fractionator 105 column to provide stripping steam for the fractionator column and to provide for a better separation of light and heavy ends (i.e., light and heavy fractions), or a higher yield of light end components. The water can be provided to the fractionator from pump 77 via a conduit or from another water source. The water provided to the fractionator is used to humidify the fuel inlet stream and to provide steam from steam-methane reformation in the reformer 109.

An air blower 81 provides the inlet air into an air heat exchanger 83 where it is heated by the stack anode exhaust stream provided via the anode exhaust conduit 157. The heated air inlet stream is then provided into the stack 3 via conduit 85. If desired, a separate air inlet stream can be provided into the stack 3 via conduit 87.

The anode exhaust stream exits the heat exchanger 83 into the three way valve 63 which splits the anode exhaust stream into two separate streams. The first stream is provided through conduit 61 into a compressor or blower 89 which provides the pressurized recycled anode exhaust stream to be mixed with the humidified fuel inlet stream, as described above. The second stream is provided from valve 63 into a condenser 91. In the condenser, the water in the stream is condensed and provided to the pump 77 or to the drain 93. If desired, additional water from a water inlet conduit 95 may also be provided to the pump 77. The remaining anode exhaust stream is provided from the condenser 91 back to the stack 3 or to be purged or to the burner 115 via conduit 157.

The system of the invention provides an ability to operate an SOFC system with diesel fuel. The system cost is believed to be lower relative to alternatives with diesel fuel. The system provides enhanced efficiency while operating on diesel fuel due to close coupling (i.e., thermal integration) of reformer and recirculation streams containing water and/or hydrogen.

### IV. Structure for Fuel Cell Current Collection

The fourth aspect discloses a structure for fuel cell current collection. This structure is arranged to allow verification of current continuity prior to fuel cell system startup.

In prior art SOFC systems, the current collector is a rigid structure which extends from the interior to the exterior of the "hot box" insulated region. For example, a hot box may comprise a thermally insulated container, cabinet or box which contains one or more SOFC stacks and high temperature stack auxiliary equipment, such as a thermally integrated fuel reformer, one or more heat exchangers, etc. The hot box is maintained at a high temperature during the stack operation due to the heat emitted by the stack and/or other heat generating auxiliary components. Preferably, the BOP and power conditioning components are located outside of the hot box to be maintained at a lower temperature.

Since the current collector structure is rigid, it can be broken during assembly, rework, shipping, or installation/removal of the "hot box" assembly. When the current collector is broken, operation of the SOFC stack is impossible. This problem, however, is not detected until after the hot box is heated to a temperature where stack open circuit voltage can be verified. Then, if a failure of the current collector is detected, the "hot box" must be removed and repaired. The entire procedure of responding to a failed current collector is lengthy and expensive.

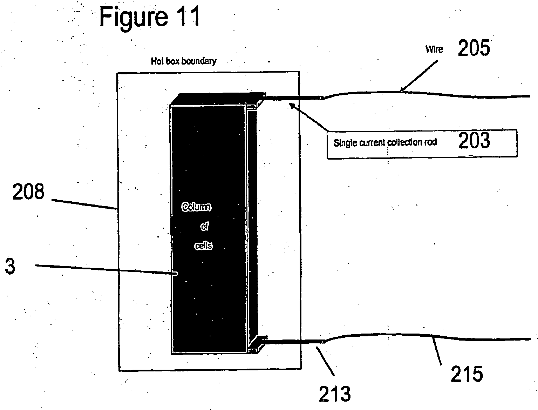

Figure 11 below illustrates a single current collector system configuration. In this configuration, a single rigid current collector rod 203 protrudes from the top of the hot box 208 containing a fuel cell stack 3 and another single current collector rod 213 protrudes from the bottom of the hot box. The rods are connected to the top and bottom portions of the columnar fuel cell stack 3 located inside the hot box. Outside of the hot box, wires 205, 215 extend from each rod 203, 213, respectively, to the power conditioning system (not shown). The rods and wires form a closed electrical circuit which allows current to flow from the stack to the power conditioning system. When one of the rigid rods is broken, an open circuit results and the fuel cell stack cannot provide a current to the power conditioning system.

The fourth aspect discloses a current collector structure which has more than two current carrying elements passing from the interior to the exterior of the hot box for each fuel cell stack. At least one current carrying element and preferably two or more of the current carrying elements comprise redundant elements which maintain a closed circuit between the stack and the power conditioning system in case one or more of the other current carrying elements are rendered inoperative (i.e. broken). Preferably, the current carrying elements comprise rigid rods which extend from the interior to the exterior of the hot box. Each rod electrically connects one end of a stack to the power conditioning system. If desired, the rod may be electrically connected to the power conditioning system by a wire and may be connected to the stack either directly or via another wire or other type of suitable electrical connector.

Prior to system startup (i.e., prior to the hot box heat-up), a voltage may be placed upon one of the current carrying elements. Continuity may be verified by checking for voltage on another one of the current carrying elements. If an open circuit is detected, one of the other current carrying elements may be used. The test to confirm which of the elements is functional may also be conducted by checking for stack open circuit voltage during hot box heat-up or after the hot box heat-up is completed. This test may be performed automatically by a computer or by operator control.

Thus, in one aspect, the system may contain one or more electrical switches. The switches may be manually or computer operated switches. The switches may be set so that the spare (i.e., redundant or back up) current carrying elements are electrically isolated and do not carry current during normal system operation with the primary elements. However, if an open circuit is detected with the primary elements, then the switches switch the current flow from one or more of the primary elements to the one or more spare elements.

In another aspect, the switches may be omitted and the current flows through all of the current carrying elements during normal operation. If one or more elements are rendered inoperative (i.e., broken), then the current automatically flows from the same potions of the stack through the other functional elements. In this aspect, each element is the same as the other elements and no elements are considered to be the back ups or spares. If the switches are present, then they are used to isolate the inoperative element from the circuit.

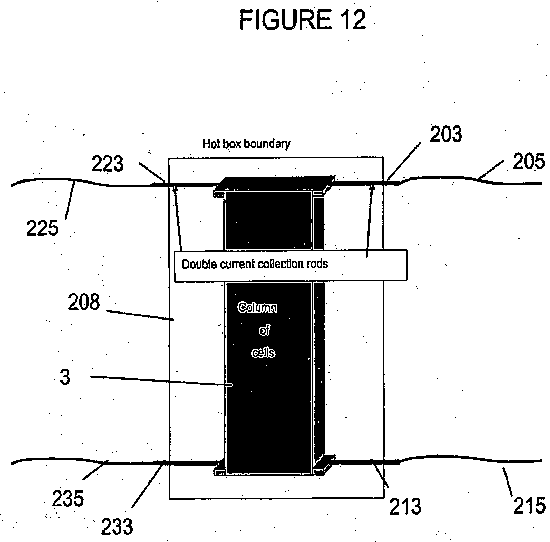

Figure 12 shows one configuration of the current collection scheme. In this configuration, each end of the stack 3 contains two or more current collection elements or rods. For example, as shown in Figure 12, each end (i.e., top and bottom ends, for example) of the stack 3 contains two rods 203, 223 and 213, 233, respectively. Wires 205, 215, 225 and 235 extend from each rod 203, 213, 223 and 233, respectively. Preferably the rods extend from different sides of the stack and thus extend through different sides of the hot box 208. For example, rods 203 and 223 extend from different sides of the stack. However, three or more rods may extend from three or more sides of the stack if desired. Furthermore, while the rods extend from opposite sides of the same end of the stack in Figure 12 (i.e., separated by 180 degrees), the rods may extend from adjacent sides of the stack (i.e., separated by 90 degrees). In general, the rods which extend from the same end of the stack may be separated by 1 to 180 degrees from each other. This is advantageous in case the hot box is dropped on one side or suffers damage on one side. This allows the rods on the other side(s) of the hot box to remain operational.

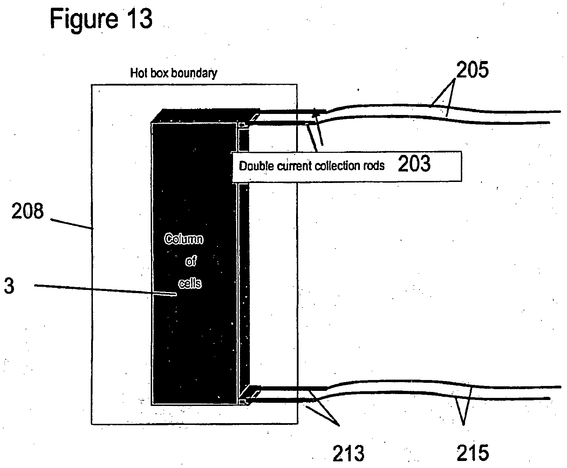

Figure 13 illustrates an alternative configuration of the current collection scheme. In this configuration, each end of the stack 3 contains two or more current collection elements or rods which extend from the same side of the stack and thus extend through the same side of the hot box. For example, the top end of stack 3 contains two rods 203 connected to respective wires 205, while the bottom end of the stack contains two rods 213 connected to respective wires 215. This configuration simplifies the electrical connection between the stack and the power conditioning system.

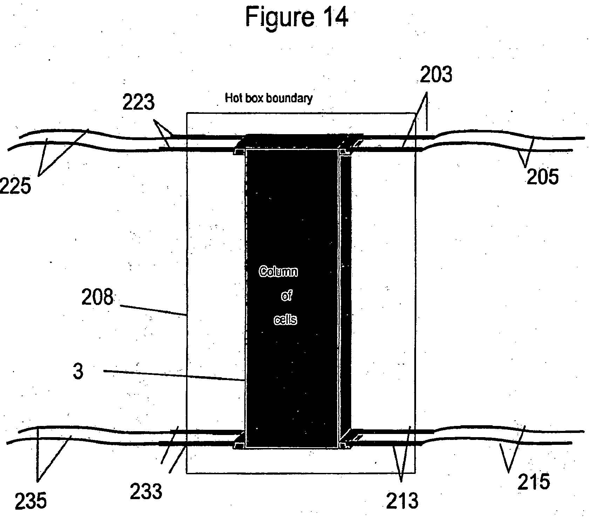

Figure 14 illustrates another alternative configuration of the current collection scheme. This configuration is a combination of the configurations shown in Figures 12 and 13 to increase the redundancy. In this configuration, each end of the stack 3 contains a first set of two or more current collection elements or rods which extend from the same side of the stack and thus extend through the same side of the hot box. Furthermore, each end of the stack contains a second set of one or more additional rods which extend from one or more different sides of the stack and thus extend through a different side of the hot box than the first set. For example, as shown in Figure 14, the top end of the stack 3 contains two rods 203 which extend from the right side of the stack and two more rods 223 which extend from the opposite, left side of the stack. The bottom end of the stack contains four additional rods 213, 233 in the same configuration.

Thus, the fourth aspect discloses the following advantages. The failure of current collection can be detected prior to hot box heat-up. Built-in spare current collector(s) are provided in the event of a failed current collector.

### V. System Start-up and Shutdown on Propane

The fifth aspect discloses a system which can be started up and shut down on propane. Propane is preferably used as fuel during start-up and shut down of a SOFC system which ordinarily operates on liquid rather than gas fuel.

For fuel cell systems designed operate exclusively on liquid fuel (such as ethanol, methanol, other oxygen containing hydrocarbon fuels, gasoline, diesel, etc.) the hotbox still has to be brought up to operating temperature during start-up of the system. In general, gaseous rather than liquid fuel is needed for start-up. For example, while the system is being heated, the anode side of each fuel cell requires a reducing environment, which may be provided by catalytic partial oxidation ("CPOX") reactor. The CPOX reactor design often requires gaseous fuel. Systems may also require the same reducing environment during normal shutdown.

For example, as described in U.S. Published Application US-2005-0164051-A1 filed as U.S. application serial number 11/002,681 on December 3, 2004, the CPOX reactor produces hydrogen from the air and a natural gas fuel mix. The produced hydrogen is sent with excess nitrogen and other oxygen containing gases, such as CO and CO₂, through a reformer if an external reformer is used. The reformer may be omitted if internal reforming type fuel cells are used (not according to the invention). The hydrogen passes through the reformer, the fuel cell stack and optionally auxiliary components and is provided to a combustor. Thus, the CPOX output is provided indirectly to the fuel cells of the stack. However, the CPOX output may be provided directly to the fuel cells of the stack. The hydrogen is burned in the combustor to heat up the reformer and stack. This process is continued until the system heats up to a temperature to sustain the fuel reformation reaction in external and/or internal reformer to supply syngas for fuel cell operation. Oxidation of the anode electrodes is avoided. Then the CPOX reactor is stopped or turned off, and the operating fuel is provided to the fuel cell stack.

However, the fuel cell system may be installed in a location where a natural gas line may not be available to provide natural gas during start-up and shut down. On the other hand, conventional liquid hydrocarbon fuel, such as diesel or JP-5, etc., is difficult to vaporize without coking.

In the fifth aspect, propane is used for start-up and shut down of the system. Propane is easy to store in liquid form and is readily available in containers, which makes it an ideal fuel to supplement fuel cell systems running on liquid fuels. The propane can be provided to the CPOX reactor, to a reformer and/or to the anode chambers of fuel cells in the stack during start-up and shut down. Propane can be provided from a propane tank or other replaceable storage vessel which is located in the system. After start-up, once the system is hot enough, the propane flow may be turned off, liquid fuel and water is evaporated and introduced to reformer(s) or stack. Alternatively, the system can operate on both propane and another liquid fuel after start-up. Thus, the propane and the liquid fuel storage vessels are fluidly connected to the fuel cell stack to allow fluid originating from each storage vessel to reach the stack, albeit possibly in a transformed or reformed form.

Thus, dual fuels enable system operation on liquid fuel and start-up and shut down on propane. Propane storage is very energy efficient, and only 12 lbs is sufficient to bring a 5 kW fuel cell system from room temperature to 750 C.

In an alternative aspect, a single propane tank can act as a backup fuel source to liquid fuels in the event that a system runs out of liquid fuel. This has the ability to improve overall availability even in the event of operator error or other system failure. The propane flow can be turned on by a computer or by the operator in case the liquid fuel runs out or the liquid fuel flow in interrupted.

### VI. Fuel Cell Design Providing Observable Evidence Of Operation

The sixth aspect discloses a fuel cell system design providing observable evidence of operation. In other words, the fuel cell system contains any suitable indicator, such as a light, visible display, sound or mechanical indicator, which shows that the system is operating.

In areas with a connection to a power grid, fuel cell systems are typically installed with the intention of providing power even when the electrical grid is not available (i.e., during a grid power outage or other failure). In other words, the fuel cell systems may act as either back-up or secondary power sources in addition to the power grid. The back-up systems contain detectors and automatic controllers which detect when grid power becomes unavailable and automatically initiate operation of the fuel cell system. Alternatively, the secondary systems may generate electricity while the grid operates, and become the primary electricity generation systems when the grid fails.

For an introductory technology, in order to have key marketing potential it is important that observers be able to recognize that the fuel cell is operational when the grid has failed. Unlike internal combustion engines, fuel cell power generators are very quiet. From distances of 100 yards or more, their operation is not obvious to observers. This presents a problem in that observers of this new technology are unable to recognize the impact of the successful operation of a fuel cell system when the grid has failed.

In conjunction with some prior art systems, a reader board type computer display (such as flat panel or CRT screen) providing live data output of the system has been provided in buildings near the fuel cell system installation in order to demonstrate that the fuel cell system is running. However, this construction is not included in the design of the fuel cell system itself.

In a sixth aspect, a fuel cell system with an integrated operation or "on state" indicator is disclosed. In one aspect, the indicator comprises a high efficiency lighting indicator. The lighting is integrated with the system enclosure. The lighting is on at all times when the fuel cell system is operational. By this means, observers are able to recognize operation of the fuel cell system even when the electrical grid has failed. Lighting devices, such as light emitting diodes, are utilized so that the power draw of the lights is negligible relative to the output of the fuel cell system. However, filament and other lighting type may also be used.

The lighting may light up a window in the system enclosure that is marked with an "ON", "OPERATING" or other similar marking. The marking may be placed on or near the window. In other words, the system housing contains an "ON" indicator light. An alternative configuration includes a logo lit by lighting from light pipes provided in the enclosure of the fuel cell system. These light pipes may have source illumination provided by LEDs. Lights may illuminated in moving patterns in order to attract the attention of observers.

Other indicator mechanisms, such as speakers generating a positive sounding lyrical tune may be provided in order to indicate system operation when the grid has failed. Alternatively, speakers providing a digitized voice message may be provided and triggered when the grid has failed. A message such as "the electrical grid has failed, but your fuel cell system is still operating" might be provided.

Alternatively, a mechanical indicator may be provided. The indicator may comprise an arrow which moves from a position marked "OFF" to a position marked "ON" when the system turns on. Other suitable mechanical indicators, such as moving or movable mechanical bars, rotating plates, etc. may also be provided.

Alternatively, a visible display may be integrated with the fuel cell system. The display may comprise a printer or a display screen which prints or displays the time and duration when the fuel cell system is turned on. This display may be built into the system housing or be electrically connected to the system and installed near the system location.

The system may also have the capability of emailing or otherwise transmitting wirelessly or via wires or optical connections an indication, as well as optionally the time and duration, that the system has been operating.

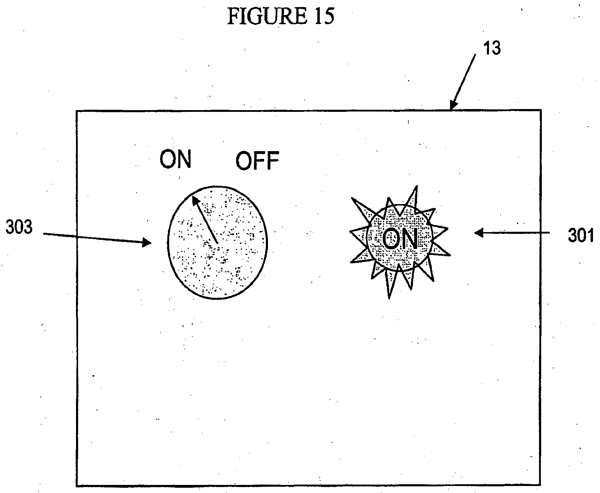

The system may contain more than one indicator. The plural indicators may be of the same or different types (i.e., two or more lighting indicators or a lighting indicator in combination with an audible indicator). For example, Figure 15 illustrates a system containing a system enclosure or cabinet 13 with a lighting indicator 301 and a mechanical indicator 303.

The sixth aspect allows an observer to recognize the significance of the operation of the fuel cell system, particularly when the electrical grid has failed. Thus a fuel cell system capable of operation without the electrical grid is provided. This system has one or more indicator features which allow observers to recognize that the system is operational even from a distance particularly when the grid has failed.

### VII. Low Pressure Liquid Hydrocarbon Atomization

The seventh aspect discloses a fuel evaporation/humidification method and dcvice which does not require a high pressure atomizer nozzle.

Liquid hydrocarbon fuel in SOFC systems has to be vaporized or atomized in order to get good mixing with water/steam prior to heating and introduction to a reformer catalyst. Even fractionated diesel, kerosene and jet fuel (such as JP5 or JP8 fuel) exhibits carbon formation upon vaporization.

The seventh aspect of fuel delivery discloses a mesh (i.e., screen) for dispersion of the liquid fuel. The mesh may be made of any suitable material which can withstand the operating environment without contaminating the fuel. Preferably, the mesh is made out of metal, such as stainless steel or other corrosion resistant metal.

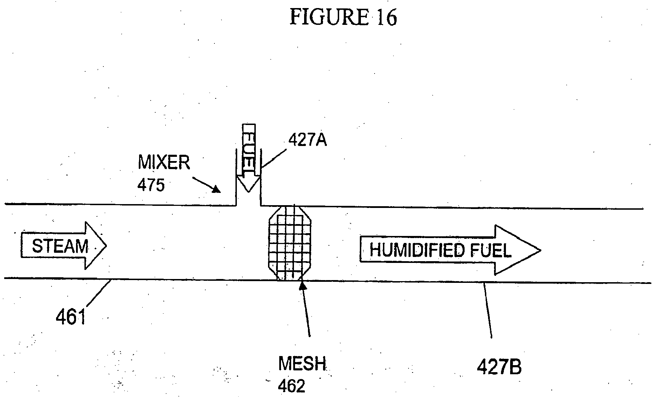

Figure 16 schematically illustrates one configuration of the system. As shown in Figure 16, vaporized water (i.e., steam or water vapor) is provided towards the reformer and fuel cell stack in the water inlet conduit 461. The water inlet conduit 461 may comprise the same conduit as the anode exhaust recycle conduit 61 shown in Figure 10 or it may comprise a conduit which is connected to an output of a steam generator. A suitable amount of water to achieve an appropriate steam:carbon ratio, such as a ratio between 2:1 and 3:1, is provided through this conduit. A liquid hydrocarbon fuel, such as diesel, jet fuel (such as JP5 or JP8), kerosene, or other desired fuel, is also provided toward the reformer and stack in a fuel inlet conduit 427A. The fuel may be passed through the fractionator column of the fuel cell of the invention as defined in the claims to separate the light ends from the heavy ends prior to being provided into conduit 427A. The fuel and steam are mixed to form a humidified fuel stream which is provided to the reformer and stack in the hot box through the humidified fuel conduit 427B, which may comprise the same conduit as conduit 127 shown in Figure 10.

The fuel inlet conduit, the water inlet conduit and the humidified fuel conduit converge together in an area or device which can be referred to as a mixer or humidifier 475. For example, the mixer may comprise an area where a fuel inlet pipe is connected to the water inlet pipe and the humidified fuel pipe. Alternatively, the mixer may comprise a separate device which enhances fuel and steam mixing, such as the humidifier 73 shown in Figure 10. Water may be vaporized to generate steam in a heat exchanger or heater upstream of the mixer.

The mesh 462 is located in the mixer or slightly downstream of the mixer 475 in the humidified fuel conduit 427B. Liquid hydrocarbon fuel flow is provided just upstream or directly onto the mesh. For example, as shown in Figure 16, the mesh is provided slightly downstream of the fuel inlet conduit 427A, such that the liquid hydrocarbon fuel flow is provided just upstream of the mesh. However, the mesh may be located in the mixer directly under or in front of the fuel inlet conduit such that the liquid hydrocarbon fuel flow is provided directly onto the mesh. The fuel may be provided onto the mesh from above, below and/or from the side.

The mesh or screen may be oriented in any suitable orientation. For example, for a flat or two dimensional mesh or screen, the major (i.e., non-edge) surfaces of the mesh may be oriented in any direction from parallel to perpendicular to the steam flow. Likewise, depending on the orientation of the fuel inlet conduit with respect to the steam inlet conduit and the humidified fuel inlet conduit and on the position of the mesh in the system, the major (i.e., non-edge) surfaces of the mesh may be oriented in any direction from parallel to perpendicular with respect to the fuel inlet stream. Thus, the liquid fuel inlet stream may be provided in any direction from parallel to perpendicular with respect to the major surface of the mesh. The major face of the mesh may be positioned in any orientation from across the humidified fuel inlet conduit (i.e., perpendicular to the axis of the conduit) to along a wall of this conduit (i.e., parallel to the axis of the conduit). Of course for a three dimensional mesh, the orientation may be different.

The mesh or screen allows even fuel droplet dispersion across the steam flow path. Steam flowing across the mesh picks up fuel particles and acts as a carrier gas. Thus, fuel is dripped or sprayed directly on the mesh upstream of steam flow path, and as fuel disperses across the mesh due the surface tension, steam flowing across picks up fuel droplets that are now much smaller than the original ones being introduced. The big fuel droplets are broken into smaller ones based on mesh opening size. The mesh opening size and wire thickness may be selected based on the desired process conditions. The mesh provides the ability to vaporize liquid hydrocarbon fuel without using a high pressure nozzle and associated parasitic losses. Unlike nozzles or fuel injectors, the method is not limited to a range of flows.

Specific example. A stainless steel screen filter was used with fuel fed into a bypass port. Fractionated JP5 was successfully delivered to the reformer and GC analysis showed expected reformation.

Although the foregoing refers to particular preferred embodiments, it will be understood that the present invention is not so limited. It will occur to those of ordinary skill in the art that various modifications may be made to the disclosed embodiments and that such modifications are intended to be within the scope of the present invention as defined in the claims.

## Claims

1. A fuel cell system, comprising:
a fuel cell stack (3);
a heavy hydrocarbon fuel source;
a fractionator (105) configured to separate light ends from heavy ends of a heavy hydrocarbon fuel provided from the heavy hydrocarbon fuel source;
a reformer (109) which is thermally integrated (108) with the fuel cell stack (3), the reformer (109) comprising a leading segment (109A) and a trailing segment (109B), wherein the leading segment comprises less reactive catalyst than the trailing segment; and
a conduit for providing water to a bottom of the fractionator, and wherein the fuel cell system is configured to provide steam for steam-methane reformation in the reformer by providing water to said conduit.

2. The system of claim 1, wherein the fuel cell stack comprises a SOFC stack.

3. The system of claim 1, wherein the heavy hydrocarbon fuel source comprises a jet fuel tank.

4. The system of claim 1, wherein the heavy hydrocarbon fuel source comprises a diesel fuel tank.

5. The system of claim 1, wherein the reactive catalyst comprises nickel and wherein nickel amount or concentration increases between the leading segment and the trailing segment in a single step or in a graded fashion.

6. The system of claim 1, further comprising a burner or a catalytic reactor which is thermally integrated with the reformer.

7. The system of claim 6, further comprising a first conduit configured to provide the heavy ends from the fractionator to the burner or the catalytic reactor.

8. The system of claim 1, further comprising a second conduit configured to provide the light ends from the fractionator to the reformer.

9. The system of claim 1, further comprising at least one element configured to recirculate at least a portion of a fuel cell stack anode exhaust stream into a fuel cell stack fuel inlet stream.

10. The system of claim 1, further comprising at least one element configured to separate and recirculate at least a portion of hydrogen from a fuel cell stack anode exhaust stream into a fuel cell stack fuel inlet stream.

11. A method of operating a fuel cell system, comprising:
providing a heavy hydrocarbon fuel into a fractionator;
separating light ends from heavy ends of the heavy hydrocarbon fuel in the fractionator;
providing the light ends to be used as fuel in a fuel cell stack via a reformer; and
providing water to a bottom of the fractionator column to provide stripping steam for the fractionator column and to provide steam for steam-methane reforming in the reformer.

12. The method of claim 11, wherein the heavy hydrocarbon fuel comprises diesel fuel or jet fuel and wherein the fuel cell stack comprises a SOFC stack.

13. The method of claim 12, further comprising:
reforming the light ends in the reformer which is thermally integrated with the fuel cell stack;
providing a reformate from the reformer to the fuel cell stack; and
providing the heavy ends from the fractionator to a burner or a catalytic reactor, wherein the burner or the catalytic reactor is thermally integrated with the reformer.

14. The method of claim 13, further comprising recirculating at least a portion of a fuel cell stack anode exhaust stream into a fuel cell stack fuel inlet stream or separating and recirculating at least a portion of hydrogen from a fuel cell stack anode exhaust stream into a fuel cell stack fuel inlet stream.

15. The method of claim 13, further comprising providing water to the reformer to provide sufficient humidity to avoid coking in the reformer.

## Patentansprüche

1. Brennstoffzellen-System, umfassend:
einen Brennstoffzellen-Stack (3);
eine Quelle für Schwere-Kohlenwasserstoffe-Brennstoff;
einen Fraktionierer (105), eingerichtet um die leichter flüchtigen Bestandteile von den schwerer flüchtigen Bestandteilen des Schwere-Kohlenwasserstoffe-Brennstoffs, der von der Quelle für den Schwere-Kohlenwasserstoffe-Brennstoff geliefert wird, zu trennen;
einen Reformer (109), der mit dem Brennstoffzellen-Stack (3) thermisch integriert ist (108), wobei der Reformer (109) ein vorgeschaltetes Segment (109A) und ein nachgeschaltetes Segment (109B) umfasst, wobei das vorgeschaltete Segment einen weniger reaktiven Katalysator als das nachgeschaltete Segment umfasst; und
eine Leitung zum Liefern von Wasser an einen Boden des Fraktionierers, und wobei das Brennstoffzellen-System eingerichtet ist, um Dampf für die Dampf-Methan-Reformierung durch Liefern von Wasser an diese Leitung in dem Reformer bereitzustellen.

2. Das System nach Anspruch 1,
wobei der Brennstoffzellen-Stack einen SOFC-Stack umfasst.

3. Das System nach Anspruch 1,
wobei die Quelle für den Schwere-Kohlenwasserstoffe-Brennstoff einen Kerosin-Brennstoff-Tank umfasst.

4. Das System nach Anspruch 1,
wobei die Quelle für den Schwere-Kohlenwasserstoffe-Brennstoff einen Diesel-Brennstoff-Tank umfasst.

5. Das System nach Anspruch 1, wobei der reaktive Katalysator Nickel umfasst und wobei die Nickelmenge oder -konzentration zwischen dem vorgeschalteten Segment und dem nachgeschalteten Segment in einem einzigen Schritt oder auf graduelle Art ansteigt.

6. Das System nach Anspruch 1, weiterhin umfassend einen Brenner oder einen katalytischen Reaktor, der mit dem Reformer thermisch integriert ist.

7. Das System nach Anspruch 6, weiterhin umfassend eine erste Leitung, die eingerichtet ist, um die schwerer flüchtigen Bestandteile des Fraktionierers an den Brenner oder den katalytischen Reaktor zu liefern.

8. Das System nach Anspruch 1, weiterhin umfassend eine zweite Leitung, die eingerichtet ist, um die leichter flüchtigen Bestandteile des Fraktionierers an den Reformer zu liefern.

9. Das System nach Anspruch 1, weiterhin umfassend mindestens ein Element, das eingerichtet ist, um zumindest einen Teil eines Brennstoffzellen-Stack-Anoden-Abgasstroms in einen Brennstoffzellen-Stack-Brennstoffeinlassstrom zu rezirkulieren.

10. Das System nach Anspruch 1, weiterhin umfassend mindestens ein Element, das eingerichtet ist, um zumindest einen Teil des Wasserstoffs aus einem Brennstoffzellen-Stack-Anoden-Abgasstrom in einen Brennstoffzellen-Stack-Brennstoff-Einlassstrom abzutrennen und zu rezirkulieren.

11. Verfahren zum Betreiben eines Brennstoffzellen-Systems, umfassend:
Liefern eines Schwere-Kohlenwasserstoffe-Brennstoffs in einen Fraktionierer;
Trennen der leichter flüchtigen Bestandteile von den schwerer flüchtigen Bestandteilen des Schwere-Kohlenwasserstoffe-Brennstoffs in dem Fraktionierer;
Liefern der leichter flüchtigen Bestandteile, die als Brennstoff verwendet werden, über einen Reformer in einen Brennstoffzellen-Stack; und
Liefern von Wasser zu einem Boden der Fraktionierer-Säule, um Stripping-Dampf für die Fraktionierer-Säule bereitzustellen, und um Dampf für die Dampf-Methan-Reformierung in dem Reformer bereitzustellen.

12. Das Verfahren nach Anspruch 11,
wobei der Schwere-Kohlenwasserstoffe-Brennstoff Diesel-Brennstoff oder Kerosin-Brennstoff umfasst, und wobei der Brennstoffzellen-Stack einen SOFC-Stack umfasst.

13. Das Verfahren nach Anspruch 12, weiterhin umfassend:
Reformieren der leichter flüchtigen Bestandteile in dem Reformer, der mit dem Brennstoffzellen-Stack thermisch integriert ist;
Liefern eines Reformats von dem Reformer an den Brennstoffzellen-Stack; und
Liefern der schwerer flüchtigen Bestandteile von dem Fraktionierer an einen Brenner oder einen katalytischen Reaktor, wobei der Brenner oder der katalytische Reaktor mit dem Reformer thermisch integriert ist.

14. Das Verfahren nach Anspruch 13, weiterhin umfassend das Rezirkulieren von mindestens einem Teil eines Brennstoffzellen-Stack-Anoden-Abgasstroms in einen Brennstoffzellen-Stack-Brennstoff-Einlassstrom oder Abtrennen oder Rezirkulieren von mindestens einem Teil des Wasserstoffs aus einem Brennstoffzellen-Stack-Anoden-Abgasstrom in einen Brennstoffzellen-Stack-Brennstoff-Einlassstrom.

15. Das Verfahren nach Anspruch 13, weiterhin umfassend das Liefern von Wasser an den Reformer, um ausreichend Feuchtigkeit bereitzustellen, um Verkokung in dem Reformer zu verhindern.

## Revendications

1. Système de pile à combustible, comprenant :
un empilement de piles à combustible (3) ;
une source d'hydrocarbure lourd ;
une colonne de fractionnement (105) conçue pour séparer des fractions légères de fractions lourdes d'un hydrocarbure lourd provenant de la source d'hydrocarbure lourd ;
un reformeur (109) auquel est thermiquement intégré (108) l'empilement de piles à combustible (3), le reformeur (109) comprenant un segment de tête (109A) et un segment de queue (109B), dans lequel le segment de tête comprend moins un catalyseur moins réactif que le segment de queue ; et
une conduite d'amenée d'eau vers une partie inférieure de la colonne de fractionnement, et dans lequel le système de pile à combustible est conçu pour amener de la vapeur destinée à une reformation vapeur-méthane dans le reformeur par amenée d'eau vers ladite conduite.

2. Système selon la revendication 1, dans lequel l'empilement de piles à combustible comprend un empilement de SOFC (piles à combustible à oxyde solide).

3. Système selon la revendication 1, dans lequel la source d'hydrocarbure lourd comprend un réservoir de carburéacteur.

4. Système selon la revendication 1, dans lequel la source d'hydrocarbure lourd comprend un réservoir de carburant diesel.

5. Système selon la revendication 1, dans lequel le catalyseur réactif comprend du nickel et dans lequel la quantité ou concentration de nickel augmente en un seul niveau ou par niveaux entre le segment de tête et le segment de queue.

6. Système selon la revendication 1, comprenant en outre un brûleur ou un réacteur catalytique auquel est thermiquement intégré le reformeur.

7. Système selon la revendication 6, comprenant en outre une première conduite conçue pour amener les fractions lourdes de la colonne de fractionnement vers le brûleur ou le réacteur catalytique.

8. Système selon la revendication 1, comprenant en outre une seconde conduite conçue pour amener les fractions légères de la colonne de fractionnement vers le reformeur.

9. Système selon la revendication 1, comprenant en outre au moins un élément conçu pour recycler au moins une partie d'un flux d'échappement d'anode d'empilement de piles à combustible en un flux d'entrée de combustible d'empilement de piles à combustible.

10. Système selon la revendication 1, comprenant en outre au moins un élément conçu pour séparer au moins une partie de l'hydrogène d'un flux d'échappement d'anode d'empilement de piles à combustible et la recycler en un flux d'entrée de combustible d'empilement de piles à combustible.

11. Procédé de mise en oeuvre d'un système de pile à combustible, consistant à :
amener un hydrocarbure lourd dans une colonne de fractionnement ;
séparer des fractions légères de fractions lourdes de l'hydrocarbure lourd dans la colonne de fractionnement ;
provoquer l'utilisation des fractions légères en tant que combustible dans un empilement de piles à combustible par le biais d'un reformeur ; et
amener de l'eau vers une partie inférieure de la colonne de fractionnement pour fournir une vapeur d'épuisement à la colonne de fractionnement et pour amener de la vapeur de reformation vapeur-méthane dans le reformeur.

12. Procédé selon la revendication 11, dans lequel l'hydrocarbure lourd comprend du carburant diesel ou du carburéacteur, et dans lequel l'empilement de piles à combustible comprend un empilement de SOFC.

13. Procédé selon la revendication 12, consistant en outre à :
reformer les fractions légères dans le reformeur auquel est thermiquement intégré l'empilement de piles à combustible ;
amener un reformat du reformeur vers l'empilement de piles à combustible ; et
amener les fractions lourdes de la colonne de fractionnement vers un brûleur ou vers un réacteur catalytique, dans lequel le reformeur est thermiquement intégré au brûleur ou au réacteur catalytique.

14. Procédé selon la revendication 13, consistant en outre à recycler au moins une partie d'un flux d'échappement d'anode d'empilement de piles à combustible en un flux d'entrée de combustible d'empilement de piles à combustible ou à séparer au moins une partie de l'hydrogène d'un flux d'échappement d'anode d'empilement de piles à combustible et à la recycler en un flux d'entrée de combustible d'empilement de piles à combustible.

15. Procédé selon la revendication 13, consistant en outre à amener de l'eau vers le reformeur pour obtenir une humidité suffisante permettant d'éviter une cokéfaction dans le reformeur.
